# EUROPEAN PATENT SPECIFICATION

(11) **EP 3 115 986 B1**
(45) Date of publication and mention of the grant of the patent: **20.05.2020**
(21) Application number: 16175398.3
(22) Date of filing: 16.10.2009
(51) Int. Cl.: G09B 5/06, B42D 3/12

(54) **PRINTED ARTICLE**
BEDRUCKTER ARTIKEL
ARTICLE IMPRIMÉ

(30) Priority: 17.10.2008 GB 0819066
(43) Date of publication of application: 11.01.2017
(62) Divisional of application: 09740940.3
(73) Proprietor: Novalia Ltd, Cambridge Cambridgeshire CB5 8RE (GB)
(72) Inventor: Stone, Kate, Cambridge, Cambridgeshire CB24 9NP (GB)
(74) Representative: Piotrowicz, Pawel Jan Andrzej

(56) References cited:
- EP-A1- 1 981 014
- WO-A2-2007/148111
- GB-A- 2 386 583
- US-A1- 2003 108 854
- US-A1- 2007 093 169

## Description

### Field of the Invention

The present invention relates to printed article.

### Background

Greeting cards which play music or have flashing lights are known in the art. Theses types of card are provided with a self-contained module. Usually, the module is attached to the back of the card and has a microswitch which is attached, via a connecting strip, to the front of the card such that when the front of the card is opened, the module is activated. Thus, when the card is opened, a tune is played.

Interactive children's books which play music or speech are also known. For example, one form of book has a panel arranged across the top or side of the book, which is accessible whatever page of the book is open and which carries buttons marked with a word or picture. Each button plays a respective piece of music or extract of speech (e.g. a word, phrase or sentence). Words or pictures are embedded in the story which prompts the reader to press a particular button and so play a corresponding piece of music or speech.

US 5 413 486 A, US 5 404 444 A, WO 92/18964 A, GB 2 347 647 A and WO 95/05650 A describe some examples of interactive books.

US 2007/093169 A describes an interactive book and toy device including a book having a plurality of pages with text and pictures thereon. A controller is mounted on the book. The device also includes a toy having a speaker positioned therein. The device also includes a connection mechanism adapted to electrically couple the book to the toy. The connection mechanism is also adapted to physically secure the book to the toy. The controller is adapted to transmit a signal to the speaker in the toy, through the connection mechanism, in response to activation of a switch in the book.

US 2005/0100874 A describes an interactive self-test book.

WO 93/17764 A which describes a toy or educational device which can instruct a user to touch a picture of a house and play back a message confirming that the correct item has been touched or informing the user that they have touched the wrong picture.

US 2003/208854 describes a book which consists of a book and a speech circuit. A printed circuit board containing press triggers is placed inside the cover of the book. A number of speech switches in the book correspond to the positions of pictures in the book. In the book, the speech circuit includes circuit for storage and sound emission, a speaker and a battery, all of which are in a box-like container linked with the book. When reading the book, press a picture in a page, the speech switch would be switched on. Based on preset programs and storage, the circuit for storage and sound emission enables the speaker to read aloud the language of the page.

Thus, traditional cards and books can be electronically enhanced to provide user interactivity, although in a somewhat simple form.

WO 2006/023780 A describes a branching storyline game. The user can work through a story to a successful ending by choosing among possible story directions at story branch points. The game may include an electronic card reader and multiple story cards.

### Summary of Invention

According to a first aspect of the present invention there is provided apparatus comprising a sheet as specified in claim 1.

Optional features are set out in the dependent claims.

### Brief Description of Drawings

Certain embodiments of the present invention will now be described, by way of example, with reference to the accompanying drawings, in which:
Figure 1 is a perspective view of a printed article;
Figure 2 is a schematic diagram of circuitry incorporated into a printed article,
Figures 3a to 3g illustrate pages from a book;
Figure 4 is flow diagram of a process performed by a controller shown in Figure 2; and
Figure 5 illustrate audio data stored in memory for the pages shown in Figures 3a to 3g; and
Figure 6 illustrates a set of look up tables for reading out the audio data shown in Figure 5.

### Detailed Description of Certain Embodiments

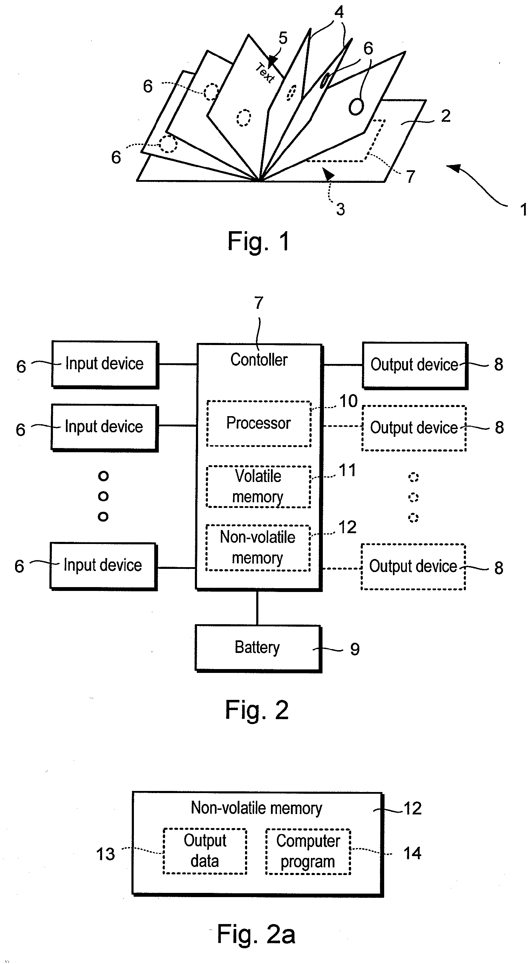

Referring to Figure 1, apparatus 1 in the form of an electronically-enhanced interactive printed article (or "printed medium") is shown. The apparatus 1 comprises a printed article 2 supporting electronic circuitry 3. In this example, the printed article 2 is in form of a board book formed from cardboard. However, the printed article 2 may be a poster, in-store display, printed promotional matter such as a tent-card, or other form of printed article.

The printed article 2 comprises one or more pages or sheets 4, each bearing printed indicia 5, for example in the form of text and/or images. In the case of a book, the printed article 2 comprises more than one page 4. However, in the case of a poster, the printed article 2 may comprise a single sheet 4. The printed article 2 may be folded and/or glued, to form a tent card or packaging. The printed article 2 may be formed from paper, card, cardboard, flexible polymer or a laminate of, for example card.

The printed article 2 may contain a story, a puzzle or game.

Referring also to Figure 2, the electronic circuitry 3 includes at least one input means or device 6, a microcontroller 7 (or some other suitable form of controller or controlling means), at least one output means or device 8 and a battery 9, for example, in the form of a thin lithium polymer battery.

The controller 7 includes at least one processor 10, volatile memory 11 and a non-volatile memory 12, such as Flash memory or electrically-erasable programmable read-only memory (EEPROM).

Suitable microcontrollers 7 are available from Microchip Technology Inc., Chandler, Arizona, USA.

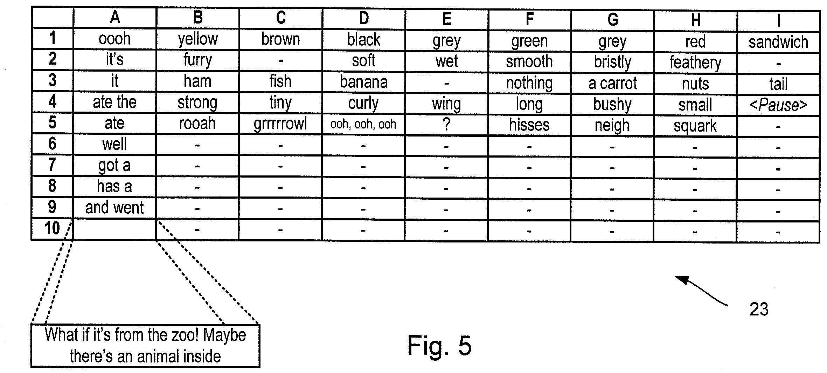

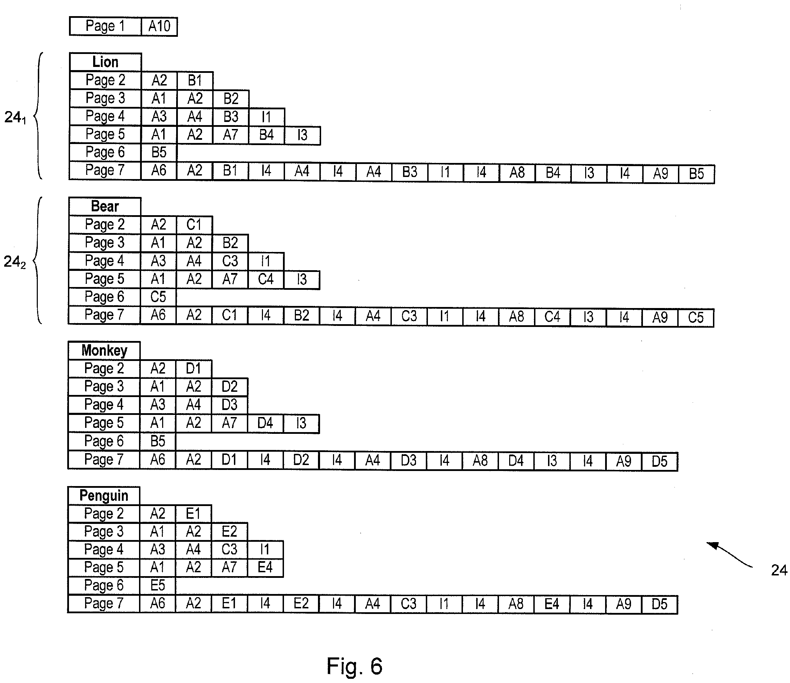

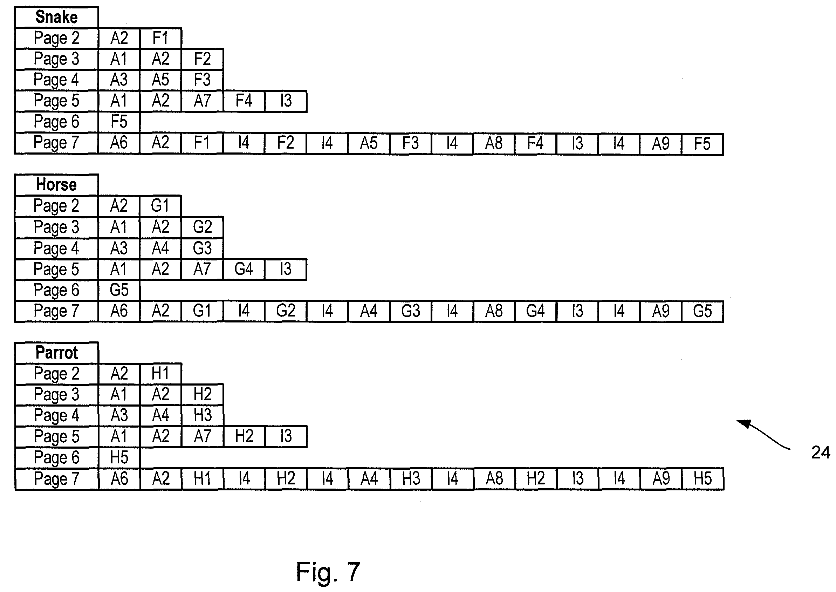

Referring also to Figure 2a, the non-volatile memory 12 can store data 13 for generating signals for the output device(s) 8 and also a computer program (or programs) 14 for controlling the processor(s) 10. For example, the data 13 may include a data table 23 (Figure 5) and lookup tables 24 (Figure 6).

The circuitry 3 is embedded in the printed article 2.

In the case of book, the circuitry 3 may be embedded in one or both of the covers of the book and/or in the pages of the book. For example, the controller 7 and battery 11 can be embedded in the back cover. Input device(s) and output devices(s) can be embedded in the pages, the front cover and/or the back cover. For example, a speaker can be embedded in the back cover and light emitting diodes can be mounted on pages.

An input device may take the form of a pair of pads bridgeable by a finger, i.e. a resistive switch. An input device may take the form of a single pad (which may be covered by non-conductive ink), i.e. a capacitive switch.

Different portions of the circuitry 3 can be connected by wires threaded through the spine of the book or by conductive paths formed by conductive ink printed directly onto the pages.

Additionally or alternatively, the book may include a printed circuit sheet (not shown) comprising a flexible substrate which supports the circuitry 3 including the conductive paths of ink. For example, the printed circuit sheet is rectangular and is divided, across the sheet, into two parts. One part carries the controller 3 and battery 11 and is sandwiched between sheets of card or board forming the back cover. The other part has longitudinal slits which form separate ribbon-like fingers or strips. A finger can be sandwiched between sheets portions forming a page. Each finger can carry one or input devices and/or one or more output devices.

The apparatus 1 can allow a narrative of a story to progress in an unpredictable, even non-linear, fashion.

To illustrate this, an example of a children's book entitled "What's in the box?" will now be described in which the output device 8 takes the form of a speaker which outputs or playbacks speech.

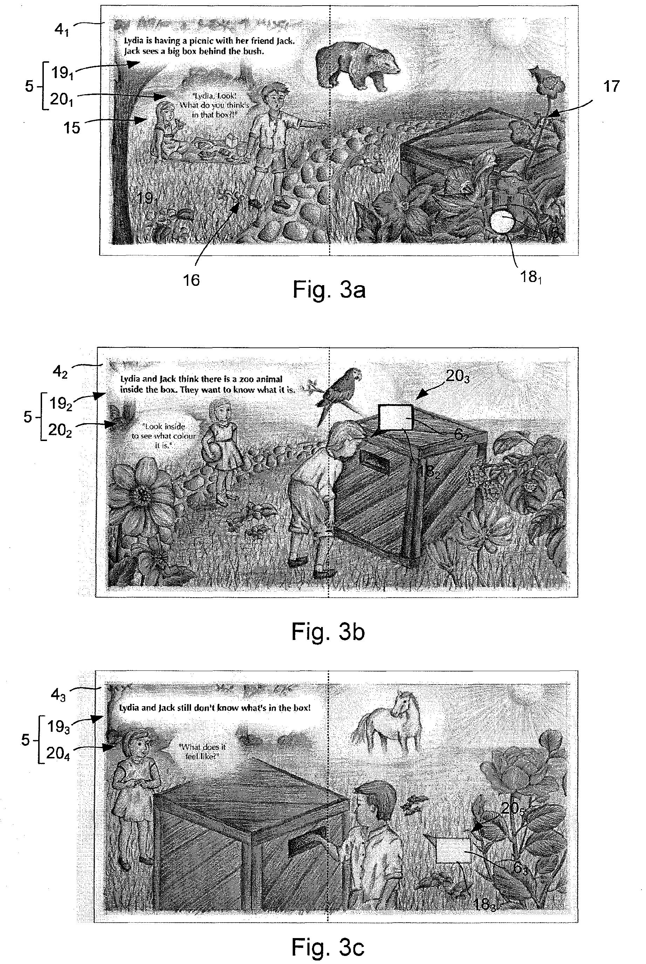

Referring to Figure 3a, a first open page 4₁ is shown.

The first open page 4₁ illustrates two characters, Lydia 15 and Jack 16, having a picnic and discussing what might be contained in a box 17 nearby. It has a first cut out 18₁ in one of two sheets forming a laminate (not shown) which allows a user direct access to a first input device 6₁, in this case a switch. The user may be a child reading the book or a child following the narrative with an older reader.

Some input devices 6, e.g. capacitive switches, need not be directly accessed and so the cut out may not be needed.

The printed indicia 5 on first open page 4₁ includes narrative 19₁, namely "Lydia is having a picnic with her friend Jack. Jack sees a big box behind the bush." and a speech bubble 20₁, namely Jack saying "Lydia, Look! What do you think's in that Box?!" In response to the user closing the switch 6₁, the speaker 8 completes Jack's statement by outputting "What if it's from the zoo!? Maybe there's an animal inside!"

Referring to Figure 3b, the user can turn to the next open page 4₂. The printed indicia 5 on second page 4₂ includes the narrative 19₂ "Lydia and Jack think there is a zoo animal inside the box. They want to know what it is." and a speech bubble 20₂, namely Lydia saying "Look inside the hole to see what colour it is."

The second page 4₂ includes a speech bubble 20₃ from Jack which forms the outline of another cut out 18₂ which allows the user to access to a second switch 6₂. The speech bubble 20₃ does not include any text. However, in response to the user closing the second switch 6₂, the speaker 8 speaks for Jack by outputting "It's..." and also the name of a colour, for example "It's brown." As will be explained later, the colour is read from a speech table 23 (Figure 5) and the colour is different from the colour previously chosen.

Referring to Figure 3c, the user can turn to the next page 4₃. The printed indicia 5 on the third open page 4₃ includes the narrative 19₃ "Lydia and Jack still don't know what's in the box!" and a speech bubble 20₄, namely Lydia saying "Jack can you feel inside the box?"

The page 4₃ includes a speech bubble 20₅ from Jack which forms the outline of another cut out 18₃ which allows the user to access to a third switch 6₃. The speech bubble 20₅ does not include any text. However, in response to the user closing the third switch 6₃, the speaker 8 speaks for Jack by outputting "Oooh, it's ..." and also the name of a texture, for example "It's furry."

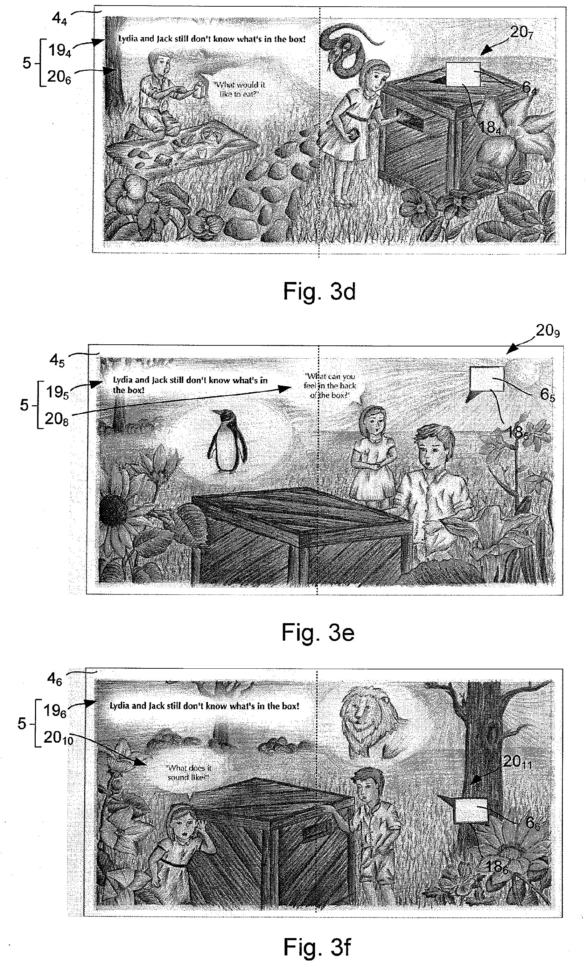

Referring to Figure 3d, the user can turn to the next page 4₄. The printed indicia 5 on fourth page 4₄ includes the narrative 19₄ "Lydia and Jack still don't know what's in the box!" and a speech bubble 20₆, namely Jack saying "Lydia why don't you see if it eats something from our picnic!"

The fourth open page 4₄ includes a speech bubble 20₇ from Lydia which forms the outline of another cut out 18₄ which allows the user to access to a fourth switch 6₄. The speech bubble 20₇ does not include any text. However, in response to the user closing the fourth switch 6₄, the speaker 8 speaks for Lydia by outputting "It ate the..." and also the name of a food or type of sandwich, for example "It ate the ham sandwich".

Referring to Figure 3e, the user can turn to the next page 4₅. The printed indicia 5 on fifth page 4₅ includes the narrative 19₅ "Lydia and Jack still don't know what's in the box!" and a speech bubble 20₈, namely Lydia saying "What can you feel in the back of the box?"

The fifth open page 4₅ includes a speech bubble 20₉ from Jack which forms the outline of another cut out 18₅ which allows the user to access to a fifth switch 6₅. The speech bubble 20₉ does not include any text. However, in response to the user closing the fifth switch 6₅, the speaker 8 may speak for Jack by adding "Oooh it's got a big tail".

Referring to Figure 3f, the user can turn to the next page 4₆. The printed indicia 5 on sixth page 4₆ includes the narrative 19₆ "Lydia and Jack still don't know what's in the box!" and a speech bubble 20₁₀, namely Lydia saying "Hmmm let's listen and see if it makes a noise".

The open page 4₆ includes a speech bubble 20₁₁ from the box which forms the outline of another cut out 18₆ which allows the user to access to a sixth switch 6₆. The speech bubble 20₁₁ does not include any text. In response to the user closing the sixth switch 6₆, the speaker 8 produces an animal noise, such as "Rooah".

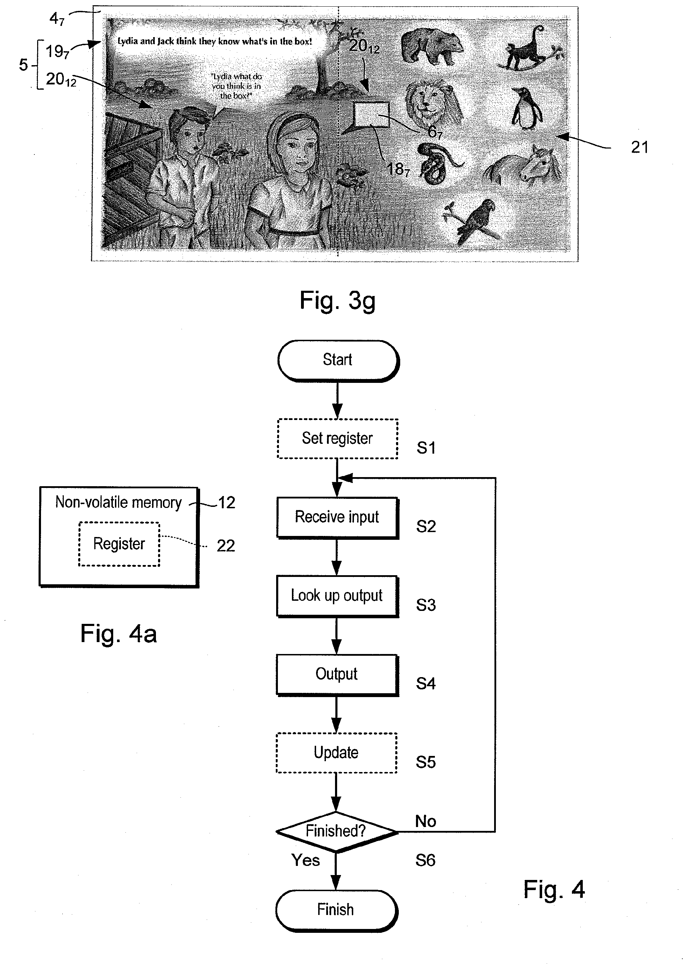

Referring to Figure 3g, the user can turn to final open page 4₇. The printed indicia 5 on seventh page 4₇ includes the narrative 19₇ "Lydia and Jack think they know what's in the box!" and a speech bubble 20₁₂, namely Jack asking "Lydia what do you think is in the box?".

The last page 4₇ includes a speech bubble 20₁₂ from Lydia which forms the outline of another cut out 18₇ which allows the user to access to a seventh switch 6₇. The speech bubble 20₁₂ does not include any text. However, in response to the user closing the seventh switch 6₇, the speaker 8 speaks for Lydia by outputting by summarising what has been said so far, for example "Well its fury, ate the ham sandwich, has a tail, and went roahh".

The printed indicia 5 on the last page 4₇ include pictures 21 of the animals, such as a bear, monkey, lion, penguin, snake and horse. Thus, the user can try to identify the animal based on what Lydia's summary.

Each time the book is read, the controller 7 chooses a different animal. Thus, each time the book is read, the story and/or the outcome is different to that when the book was last read.

The controller 7 may detect that the book is being read anew, for example, by using a micro-switch (not shown) or photo-detector (not shown) to sense when the book is being opened, by sensing when the first switch 6₁ is being pressed or by using a timer.

Referring to Figures 1 and 4, operation of the controller 7 will now be described.

Referring also to Figure 4a, the controller 7, in response to a trigger, may set a parameter or register 22 stored in non-volatile memory 12 which indicates a state (step S1).

The register 22 may store an integer value. For example, the register 22 may be a counter which is incremented in response to the trigger. Alternatively, the register 22 may be re-set, e.g. to 0, in response to the trigger.

Using the example of "What's in the box?" book, the trigger may occur as a result of closing the first switch 6₁ (Figure 3a) on the first page 4₁ (Figure 3a) and the register may be a counter taking values between 1 and 7.

In some embodiments, the controller 7 need not use a register 22 and the register 22 may be omitted.

The controller 7 receives a signal from an input device 6 (step S2), looks up a response (step S3) and outputs the response (step S4).

The response may depend on the value of the register. The response may depend on whether the same input device 6 has received user input. For example, the controller 7 may determine whether a switch has been pressed once or twice. The response may depend on whether a different input device 6 has received user input. For example, the controller 7 may determine whether a first switch has been pressed, followed by a second switch. The response may depend on a sequence of user inputs.

The controller 7 may update the resister 22 or another, different register (not shown) (step S5). A different register may be used to store previous user response(s), which can be used to affect outcomes in the future.

The controller 7 may determine whether the process has finished (step S6). For example, this may occur if a timer expires or if a given input device 6 receives any or a particular signal. For example, in the case of a book, then signal may be the book being closed (sensed by, for example, a micro-switch) or a button on a last page being pressed.

If the process has not finished, the controller 7 may wait for further inputs without (re-)setting the register.

Using the example of "What's in the box?", the controller 7 looks up a response depending on the value of the register 22. For example, "1" may represent a lion, "2" may represent a bear, "3" may represent a monkey, "4" may represent a penguin, "5" may represent a snake, "6" may represent a horse and "7" may represent a parrot.

As shown in Figures 5 and 6, speech data 23 can be stored in non-volatile memory 22 in an array {A1, A2, ..., I10}, together with a set of look-up tables 24 for reading out the speech data 14 out of the array according to the value of the register 22. Thus, if the register 22 is set to "1", then the controller 7 uses a first look-up table 24₁ to read out the sequence of speech data 23 for each page, i.e. for each switch. For example, on page 2 of the book 2, if the first switch 6₁ (Figure 3a) is pressed, then the look up table 24 reads out the speech data 23 in elements A2 and then B1, namely "It's yellow".

However, if the register is set to "2", then the controller 7 uses a second look-up table 24₂ to read out the sequence of speech data 23 for each page. Thus, pressing the first switch 6₁ (Figure 3a), then the controller 7 uses the look up table 24 to read out the speech data 23 in elements A2 and then C1, namely "It's brown".

It will be appreciated that many modifications may be made to the embodiments hereinbefore described.

As explained earlier, the printed article 2 may take the form of a printed book. However, the printed article 2 may take other forms and may operate in different ways.

For example, the book may recount a linear, interactive story where the reader may touch switches to activate related or random light emitting diode display, sound clips or another form of response driven by the controller.

The book may contain a non-linear interactive story where the reader can touch switches which affect the narrative of the story and create an element of the unknown and unpredictable to the reader.

The book need not contain a structured story, but may comprise one or more puzzles, tasks or games. Thus, completing a puzzle (or part of a puzzle) on one page, affects what is presented to the user or affects outcomes on other pages.

The book may be structured as a game where the reader must complete tasks in different "worlds" to unlock others. To complete the game, the reader must unlock and complete all the "worlds". There may be a "homepage" to which the reader returns after completing a task, e.g. to be set a new task by being instructed to turn to given page.

The printed article need not take the form of a book.

For example, the printed article 2 may take the form of an in-store display.

On a make-up point of sale, the display could provide information about how different products suit each other and also the shopper, taking into account their skin colour/ condition, eye colour, hair colour, face shape and style, as well how different products complement or clash with one another.

Situated near computer games, DVDs etc, an in-store display can demonstrate a product from the view point of different characters to give different point of views and add dynamism to the display.

An advertisement or display could be adapted for respond differently to different audience based, for example, on the shopper's or viewer's initial response to a question or a place they choose to touch first on a display.

The printed article 2 may take the form of a tent card.

A game may be incorporated into the card, such as the "Simon game", so as to engage with the player and lead them to purchase a product advertised on the card.

The printed article 2 may take the form of a questionnaire or horoscope on a sheet or page. The sheet can have switches to indicate multiple choices, e.g. "a", "b" and "c" or "yes" and "no". Thus, an individual can be lead through a series of questions display or read out to them.

## Claims

1. Apparatus comprising a sheet supporting:
a plurality of user input devices (6) which are touch switches;
at least one output device (8); and
a controller (7);
wherein the controller is configured, in response to receiving an input signal from a one of the plurality of user input devices, to cause an output device to produce an output signal in dependence upon an updatable parameter indicating one of at least two states and wherein the controller is configured to select a response to actuation of a user input device from a first set of responses (241) when the user input device is actuated by touching a part of the sheet a first time and when the updateable parameter (22) indicates a first state of the at least two states, and to select a response to actuation of the user input device from a second set of responses (242) when the given user input device is actuated by touching the same part of the sheet a second time and when the updateable parameter indicates a second, different state of the at least two states.

2. Apparatus according to claim 1, wherein the controller (7) is configured to identify that the user input device (6) is being actuated by touching the same part of the sheet the second time by determining whether a first user input device is actuated.

3. Apparatus according to claim 1, wherein the controller (7) is configured to identify that the user input device (6) is being actuated by touching the same part of the sheet the second time by determining if a timer has expired.

4. Apparatus according to any preceding claim, which is a poster.

5. Apparatus according to any preceding claim, wherein the user input devices (6) includes at least one switch which comprises two pads for providing terminals which are bridgeable by a finger of a user.

6. Apparatus according to any preceding claim, wherein the user input devices (6) includes at least one switch which comprises a pad for providing a capacitive switch.

7. Apparatus according to any preceding claim, wherein the at least one user input device (6) includes at least one transducer.

8. Apparatus according to any preceding, wherein the at least one output device (8) comprises a speaker.

9. Apparatus according to claim 7 or 8, wherein the controller includes memory (12) for storing audio data (13) and a processor (10) for reading audio data and generating an audio signal.

10. Apparatus according to any preceding claim, wherein the at least one output device (8) comprises at least one display or light emitting means.

11. Apparatus according to any preceding claim, wherein the apparatus comprises paper, card or flexible polymer.

12. Apparatus according to any preceding claim, wherein the updatable parameter stores one or more previous user responses.

13. Apparatus according to claim 12, wherein the updateable parameter stores a previous input signal received by the input device or another one of the plurality of input devices.

14. Apparatus according to any one of claims 1 to 11, wherein the output device produces an output signal in dependence upon the updatable parameter indicating one of at least two states and upon a second updatable parameter storing one or more previous user responses.

15. Apparatus according to claim 14 wherein the second updateable parameter stores a previous input signal received by the input device or another one of the plurality of input devices.

## Patentansprüche

1. Vorrichtung, die ein Lage umfasst, die folgendes trägt:
eine Mehrzahl von Benutzereingabevorrichtungen (6), bei denen es sich um Berührungsschalter handelt;
mindestens eine Ausgabevorrichtung (8); und
eine Steuereinheit (7);
wobei die Steuereinheit so gestaltet ist, dass sie als Reaktion auf den Empfang eines Eingangssignals von einer der Mehrzahl von Benutzereingabevorrichtungen bewirkt, dass eine Ausgabevorrichtung ein Ausgangssignal in Abhängigkeit von einem aktualisierbaren Parameter erzeugt, das einen von mindestens zwei Zuständen anzeigt, und wobei die Steuereinheit so gestaltet ist, dass sie eine Reaktion auf eine Betätigung einer Benutzereingabevorrichtung aus einer Gruppe von Reaktionen (241) auswählt, wenn die Benutzereingabevorrichtung durch erstmaliges Berühren eines Teils der Lage betätigt wird, und wenn der aktualisierbare Parameter (22) einen ersten Zustand der mindestens zwei Zustände anzeigt, und so dass eine Reaktion auf die Betätigung der Benutzereingabevorrichtung aus einer zweiten Gruppe von Reaktionen (242) ausgewählt wird, wenn die bestimmte Benutzereingabevorrichtung durch Berühren des gleichen Teils der Lage zum zweiten Mal betätigt wird, und wenn der aktualisierbare Parameter einen zweiten, anderen Zustand der mindestens zwei Zustände anzeigt.

2. Vorrichtung nach Anspruch 1, wobei die Steuereinheit (7) so gestaltet ist, dass sie feststellt, dass die Benutzereingabevorrichtung (6) durch Berühren des gleichen Teils der Lage zum zweiten Mal betätigt wird, indem sie bestimmt, ob eine erste Benutzereingabevorrichtung betätigt wird.

3. Vorrichtung nach Anspruch 1, wobei die Steuereinheit (7) so gestaltet ist, dass sie feststellt, dass die Benutzereingabevorrichtung (6) durch Berühren des gleichen Teils der Lage zum zweiten Mal betätigt wird, indem sie bestimmt, ob ein Timer abgelaufen ist.

4. Vorrichtung nach einem der vorstehenden Ansprüche, bei der es sich um ein Poster handelt.

5. Vorrichtung nach einem der vorstehenden Ansprüche, wobei die Benutzereingabevorrichtungen (6) mindestens einen Schalter aufweisen, der zwei Pads umfasst, um Anschlüsse bereitzustellen, die durch einen Finger eines Benutzers überbrückt werden können.

6. Vorrichtung nach einem der vorstehenden Ansprüche, wobei die Benutzereingabevorrichtungen (6) mindestens einen Schalter aufweisen, der ein Pad umfasst, um einen kapazitiven Schalter bereitzustellen.

7. Vorrichtung nach einem der vorstehenden Ansprüche, wobei die mindestens eine Benutzereingabevorrichtung (6) mindestens einen Wandler aufweist.

8. Vorrichtung nach einem der vorstehenden Ansprüche, wobei die mindestens eine Benutzerausgabevorrichtung (8) einen Lautsprecher umfasst.

9. Vorrichtung nach Anspruch 7 oder 8, wobei die Steuereinheit einen Speicher (12) zum Speichern von Audiodaten (13) und einen Prozessor (10) zum Lesen der Audiodaten und zum Erzeugen eines Tonsignals aufweist.

10. Vorrichtung nach einem der vorstehenden Ansprüche, wobei die mindestens eine Benutzerausgabevorrichtung (8) mindestens ein Display oder ein lichtemittierendes Mittel umfasst.

11. Vorrichtung nach einem der vorstehenden Ansprüche, wobei die Vorrichtung Papier, Karton oder flexibles Polymer umfasst.

12. Vorrichtung nach einem der vorstehenden Ansprüche, wobei der aktualisierbare Parameter eine oder mehrere frühere Benutzerreaktionen speichert.

13. Vorrichtung nach Anspruch 12, wobei der aktualisierbare Parameter ein früheres Eingangssignal speichert, das von der Eingabevorrichtung empfangen worden ist oder von einer anderen der Mehrzahl von Eingabevorrichtungen.

14. Vorrichtung nach einem der Ansprüche 1 bis 11, wobei die Ausgabevorrichtung ein Ausgangssignal in Abhängigkeit von dem aktualisierbaren Parameter erzeugt, das einen von mindestens zwei Zuständen anzeigt, und von einem zweiten aktualisierbaren Parameter, der eine oder mehrere frühere Benutzerreaktionen speichert.

15. Vorrichtung nach Anspruch 14, wobei der zweite aktualisierbare Parameter ein früheres Eingangssignal speichert, das von der Eingabevorrichtung oder von einer anderen der Mehrzahl von Eingabevorrichtungen empfangen wird.

## Revendications

1. Appareil comprenant un support de feuille :
une pluralité de dispositifs d'entrée utilisateur (6) qui sont des commutateurs tactiles ;
au moins un dispositif de sortie (8) ; et
un dispositif de commande (7) ;
le dispositif de commande étant conçu, en réponse à la réception d'un signal d'entrée provenant de l'un de la pluralité de dispositifs d'entrée utilisateur, pour amener un dispositif de sortie à produire un signal de sortie en fonction d'un paramètre actualisable indiquant l'un d'au moins deux états et le dispositif de commande étant conçu pour sélectionner une réponse à l'actionnement d'un dispositif d'entrée utilisateur parmi un premier ensemble de réponses (241) lorsque le dispositif d'entrée utilisateur est actionné en touchant une partie de la feuille une première fois et lorsque le paramètre actualisable (22) indique un premier état parmi les au moins deux états, et pour sélectionner une réponse à l'actionnement du dispositif d'entrée utilisateur parmi un second ensemble de réponses (242) lorsque le dispositif d'entrée utilisateur donné est actionné en touchant la même partie de la feuille une seconde fois et lorsque le paramètre actualisable indique un second état différent parmi les au moins deux états.

2. Appareil selon la revendication 1, le dispositif de commande (7) étant conçu pour identifier que le dispositif d'entrée utilisateur (6) est actionné en touchant la même partie de la feuille une seconde fois en déterminant si un premier dispositif d'entrée utilisateur est actionné.

3. Appareil selon la revendication 1, le dispositif de commande (7) étant conçu pour identifier que le dispositif d'entrée utilisateur (6) est actionné en touchant la même partie de la feuille une seconde fois en déterminant si une minuterie a expiré.

4. Appareil selon l'une quelconque des revendications précédentes, qui est une affiche.

5. Appareil selon l'une quelconque des revendications précédentes, les dispositifs d'entrée utilisateur (6) comprenant au moins un commutateur qui comprend deux pastilles pour fournir des terminaux qui peuvent être pontés par un doigt d'un utilisateur.

6. Appareil selon l'une quelconque des revendications précédentes, les dispositifs d'entrée utilisateur (6) comprenant au moins un commutateur qui comprend une pastille pour fournir un commutateur capacitif.

7. Appareil selon l'une quelconque des revendications précédentes, l'au moins un dispositif d'entrée utilisateur (6) comprenant au moins un transducteur.

8. Appareil selon l'une quelconque des revendications précédentes, l'au moins un dispositif de sortie (8) comprenant un haut-parleur.

9. Appareil selon la revendication 7 ou 8, le dispositif de commande comprenant une mémoire (12) pour stocker des données audio (13) et un processeur (10) pour lire des données audio et générer un signal audio.

10. Appareil selon l'une quelconque des revendications précédentes, l'au moins un dispositif de sortie (8) comprenant au moins un affichage ou moyen électroluminescent.

11. Appareil selon l'une quelconque des revendications précédentes, l'appareil comprenant du papier, du carton ou un polymère flexible.

12. Appareil selon l'une quelconque des revendications précédentes, le paramètre actualisable stockant au moins une réponse d'utilisateur précédente.

13. Appareil selon la revendication 12, le paramètre actualisable stockant un signal d'entrée précédent reçu par le dispositif d'entrée ou un autre de la pluralité de dispositifs d'entrée.

14. Appareil selon l'une quelconque des revendications 1 à 11, le dispositif de sortie produisant un signal de sortie en fonction du paramètre actualisable indiquant l'un d'au moins deux états et d'un second paramètre actualisable stockant au moins une réponse d'utilisateur précédente.

15. Appareil selon la revendication 14, le second paramètre actualisable stockant un signal d'entrée précédent reçu par le dispositif d'entrée ou un autre de la pluralité de dispositifs d'entrée.
